# EUROPÄISCHE PATENTANMELDUNG

(11) **EP 0 571 729 A2**
(43) Veröffentlichungstag der Anmeldung: **01.12.1993**
(21) Anmeldenummer: 93104547.0
(22) Anmeldetag: 19.03.1993
(51) Int. Cl.: G02B 6/26, G02B 6/42, G02B 6/38

(54) **Optischer Koppler**

(30) Priorität: 29.05.1992 DE 4217806
(71) Anmelder: Richard Hirschmann GmbH & Co., D-73726 Esslingen (DE)
(72) Erfinder: Sandbaumhüter, Dirk, W-7000 Stuttgart 1 (DE); Röckle, Jürgen, W-7312 Kirchheim (DE)
(74) Vertreter: Geyer, Ulrich F., Dr. Dipl.-Phys.

(57) **Zusammenfassung**

Bei einem optischen Koppler für die Verbindung eines lichtabstrahlenden Elements (1 bzw. 5) mit einem lichtaufnehmenden Element (5 bzw. 1) ergibt sich ein reflexionfreier Übergang, wenn die Lichtaustrittsfläche und die Lichteintrittsfläche der Elemente in direktem physikalischen Kontakt stehen, oder wenn wenigstens eine der Flächen (9 bzw. 8) mit einer reflektionsverhindernden Schicht versehen ist, oder wenn wenigstens eine der Flächen eine Schräge (10) zur Lichtausbreitungsrichtung aufweist. Vorzugsweise ist ein Zwischenelement (6) zwischen dem lichtabgebenden Element (1 bzw. 5) und dem lichtaufnehmenden Element (5 bzw. 1) vorgesehen, das eine Luftstrecke ausfüllt, so daß Fresnel-Reflexionen nicht auftreten.

## Beschreibung

Die Erfindung betrifft einen optischen Koppler für die Verbindung eines lichtabgebenden Elements mit einem lichtaufnehmenden Element.

Aus der EP-A-0 402 612, der DE-C-37 05 408, der DE-A-38 33 311 oder der DE-U-87 06 844 sind optische Koppler der eingangs genannten Art bekannt. Zwischen einem Lichtwellenleiter und einem optisch abbildenden System oder einem anderen lichtaufnehmenden Element besteht ein Zwischenraum, so daß der Lichtstrahl aus dem Lichtwellenleiter in das Übertragungsmedium Luft eintritt, bzw. der Lichtstrahl vom Übertragungsmedium Luft in das Material des Lichtwellenleiters an der Stirnfläche desselben eintritt. Das Licht tritt also von einem Medium in ein anderes Medium mit unterschiedlicher Brechzahl ein, so daß Reflektion, die sogenannte Fresnel-Reflexion, beim Glas-Luft- bzw. Luft-Glas-Übergang auftritt. Durch Reflexionen entstehen unerwünschte Intensitätsverluste und darüber hinaus auch Schwierigkeiten beispielsweise im Zusammenhang mit bidirektionalen Lichtübertragungseinrichtungen, bei denen optoelektrische Sende- und Empfangsvorrichtungen zum Einspeisen bzw. zum Empfangen eines Lichtstrahls in bzw. aus einem bidirektional verwendeten Lichtwellenleiter eingesetzt werden, wie dies beispielsweise aus der DE-A-38 33 311 oder der nicht vorveröffentlichten DE-A-40 41 278 der Fall ist. Um bei diesen bidirektionalen Anordnungen das Übersprechen, welches im wesentlichen auf die Fresnel-Reflexion zurückgeht, zu unterbinden bzw. kleinzuhalten, sind aufwendige Einrichtungen, wie Polarisationsfilter oder der Einsatz bereits polarisierten Lichtes erforderlich.

Der Erfindung liegt daher die Aufgabe zugrunde, einen optischen Koppler zu schaffen, bei dem eine Fresnel-Reflexion im wesentlichen nicht auftritt und der dennoch einen einfachen Aufbau aufweist und mit geringem Aufwand hergestellt werden kann.

Die gestellte Aufgabe wird erfindungsgemäß dadurch gelöst, daß eine Lichtaustrittsfläche des lichtabgebenden Elements in direktem physikalischem Kontakt mit einer Lichteintrittsfläche des lichtaufnehmenden Elements steht. Durch die direkte Kontaktierung der Austritts- und Eintrittsflächen wird vermieden, daß der zu übertragende Lichtstrahl durch Luft führt, so daß Fresnel-Reflektionen nicht, jedenfalls nicht auf Grund des Lichtstrahlübergangs vom Übertragungsmedium Luft in das Übertragungsmedium Glas oder umgekehrt auftritt.

Die gestellte Aufgabe wird erfindungsgemäß auch dadurch gelöst, daS die Lichtaustritts-und/oder Lichteintrittsfläche des lichtabgebenden Elements bzw. des lichtaufnehmenden Elements mit wenigstens einer reflexionsverhindernden Schicht versehen ist. Durch das Aufbringen reflexionsverhindernder Schichten beispielsweise auf die Stirnfläche eines Lichtwellenleiter-Steckerstifts wird die Fresnel-Reflexion verhindert.

Erfindungsgemäß wird die gestellte Aufgabe auch dadurch gelöst, daß die Lichteintrittsfläche und/oder die Lichtaustrittsfläche eine Schräge zur Lichtausbreitungsrichtung aufweist. Durch die Verwendung eines Schrägschliffes wird zwar die Fresnel-Reflexion nicht vermieden, die reflektierenden Strahlen werden jedoch nicht in sich selbst zurückgeworfen, so daß insbesondere bei bidirektionaler Übertragung von Lichtstrahlen damit verbundene Schwierigkeiten vermieden werden.

Insbesondere bei Verwendung der Erfindung im Zusammenhang mit bidirektionalen Übertragungssystemen läßt sich auf Grund dessen, daß an den Lichtaustritts- und/oder Eintrittsflächen der Koppelelemente keine Reflexion auftritt, das Übersprechen verringern, sowie das Signal/Rausch-Verhältnis und damit die Dynamik des Systems wesentlich verbessern. Bei derartigen bidiraktionalen Übertragungssystemen wird kein polarisiertes Licht benötigt, bzw. Polarisationsfilter, wie sie etwa bei der bereits erwähnten, nicht vorveröffentlichten DE-A-40 41 278 beschrieben sind, können entfallen, so daß auch mit den Polarisationsfiltern verbundene Verluste nicht entstehen. Ein weiterer Vorteil besteht auch darin, daß auch polarisationserhaltende Lichtwellenleiter verwendet werden können, was bei der älteren Anordnung gemäß der DE-A-40 41 278 nachteilig war, weil am anderen Ende des Lichtwellenleiters Stecker mit einer besonderen Ausrichtung oder Ausbildung vorgesehen sein mußten, wenn der Lichtwellenleiter nicht lang genug war, um eine Polarisationsauflösung bzw. - durchmischung herbeizuführen. Der erfindungsgemäße optische Koppler ist auf Grund der Tatsache, daS der Lichtwellenleiter polarisationserhaltend sein kann, daher sowohl für Mehrmodenfasern, als auch für Einmodenfasern beliebiger Länge geeignet.

Insbesondere im Zusammenhang mit der ersten erfindungsgemäßen Aufgabenlösung, bei der die Koppelelemente in direktem physikalischem Kontakt stehen, ist es vorteilhaft, wenn das lichtabgebende Element und das lichtaufnehmende Element im wesentlichen denselben Brechungsindex aufweisen. Dies ist üblicherweise immer der Fall, wenn die beiden lichtleitenden Koppelmedien aus Glas oder Acrylglas bzw. PMMA oder aus ähnlichem Material bestehen, so daß der Glas/Glas-oder entsprechende Übergang für den Lichtstrahl reflexionsfrei ist.

Die Lichteintritts- und/oder Lichtaustrittsfläche des lichtabgebenden bzw. lichtaufnehmenden Elememts kann poliert, bei einer senkrechten Fläche jedoch auch durch Anritzen/Brechen bearbeitet werden.

Die Lichtaustrittsfläche und/oder die Lichteintrittsfläche des lichtabgebenden Elements bzw. des lichtaufnehmenden Elements, d. h. also wenigstens eine der Kontaktflächen ist vorzugsweise konvex gestaltet, so daß ein bestmöglicher physikalischer Kontakt entsteht.

Vorteilhaft ist es weiterhin, wenn zwischen der Lichtaustrittsfläche und der Lichteintrittsfläche des lichtabgebenden Elements bzw. des lichtaufnehmenden Elements ein Brechungsindex-Anpassungselement, vorzugsweise eine Indexfolie, auch als Matching-Folie bezeichnet, vorgesehen ist. Der erfindungsgemäße optische Koppler kann insbesondere von Vorteil in einer Anordnung vorgesehen sein, bei der das lichtabgebende Element und/oder das lichtaufnehmende Element ein Lichtwellenleiter-Steckerstift oder ein optisch-abbildendes System, beispielsweise eine Gradientenindexlinse, ist.

Gemäß einer besonders vorteilhaften Ausgestaltung der Erfindung ist zwischen dem lichtabgebenden Element und dem lichtaufnehmenden Element ein Zwischenelement vorgesehen. Die Strekke zwischen der Lichtaustrittsfläche des lichtabgebenden Elements und der Lichteintrittsfläche des lichtaufnehmenden Elements, beispielsweise die Strecke zwischen einem Lichtwellenleiter-Steckerstift und einem optisch-abbildenden System wird von dem Zwischenelement ausgefüllt, das Reflexe verhindert, so daß eine Fresnel-Reflexion im Ansatz verhindert wird. Bei den Anordnungen, wie sie in der De-A-40 41 278 beschrieben und zum Beispiel aus den bereits genannten DE-402 612, der DE-C-37 05 408 oder der DE-U-87 04 678 bekannt sind, wird das Zwischen- oder Distanzstück zwischen dem Steckerstift und dem optisch-abbildenden System durch ein erfindungsgemäßes reflexionsverhinderndes Zwischenelement ersetzt. Das Zwischenelement kann vorzugsweise wenigstens eines der zuvor beschriebenen Merkmale, wie den direkten physiklischen Kontakt der Kontaktflächen, eine reflexionsverhindernde Schicht und/oder einen Schrägschliff aufweisen.

Gemäß einer vorteilhaften Ausführungsform weist das Zwischenelement ein Lichtwellenleiter-Stück, vorzugsweise mit demselben Brechungsindex wie der zu koppelnde Lichtwellenleiter auf. Vorzugsweise ist dabei das Zwischenelement bzw. das Lichtwellenleiter-Stück des Zwischenelements austauschbar gestaltet, so daß Steckerstifte mit veschiedenen Fasern verwendet werden können und der optische Koppler für verschiedene Fasergeometrien jederzeit schnell umrüstbar ist.

Mit weiterem Vorteil besteht das Zwischenelement aus einem plastisch verformbaren Material, ggf. mit angepaßtem Brechungsindex, vorzugsweise aus Silicon.

Das Zwischenelement ist vorzugsweise und auf sehr preisgünstige Art aus einem Lichtwellenleiter-Steckerstift hergestellt, wobei insbesondere auch mehrere Zwischenelemente aus einem einzigen Steckerstift gewonnen werden können.

Gemäß einer alternativen Ausführungsform der Erfindung besteht das Zwischenelement mit Vorteil aus Keramik.

Besonders vorteilhaft ist es, wenn eine Verdrehsicherung für den Lichtwellenleiter-Stecker vorgesehen ist, um mögliche Verkratzungen bei häufigem Stecken zu verhindern, wenn der Anschlußstecker gegen das Ende des Zwischenelements gedrückt wird. Durch den physikalischen Kontakt der lichtleitenden Medien ergibt sich ein reflexionsfreier Glas/Glas-Übergang. Mit dem Distanzstück als starrer Anschlag für einen Lichtwellenleiter-Steckerstift ergibt sich ein einfacher und robuster Aufbau mit einem einfachen Montageverhalten ohne aufwendige Justierung. Bei der Herstellung und Verwendung des Zwischenelements kann auf vorhandene Teile und Techniken zurückgegriffen werden, so daß sich eine einfache, kostengünstige Anordnung ergibt.

Der erfindungsgemäße optische Koppler kann zm Beispiel für eine Stecker/Stecker-, Stecker/Sender- oder Stecker/Empfänger-Kopplung verwendet werden.

Die Erfindung wird nachstehend an Hand von Ausführungsbeispielen unter Bezugnahme auf die Zeichnungen erläutert. Es zeigen:
Fig. 1 eine schematische Darstellung des erfindungsgemäßen Kopplers unter Verwendung eines Zwischenelements im Zusammenhang mit einer in der DE-A-40 41 278 beschriebenen Anordnung;
Fig. 2 den erfindungsgemäßen optischen Koppler am Beispiel einer Stecker/Stecker-Verbindung unter Verwendung eines Zwischenelements und
Fig. 3 Beispiele für mögliche Ausführungsformen der Stirnflächen des lichtabgebenden bzw. aufnehmenden Elements und Ausführungsformen des Zwischenelements.

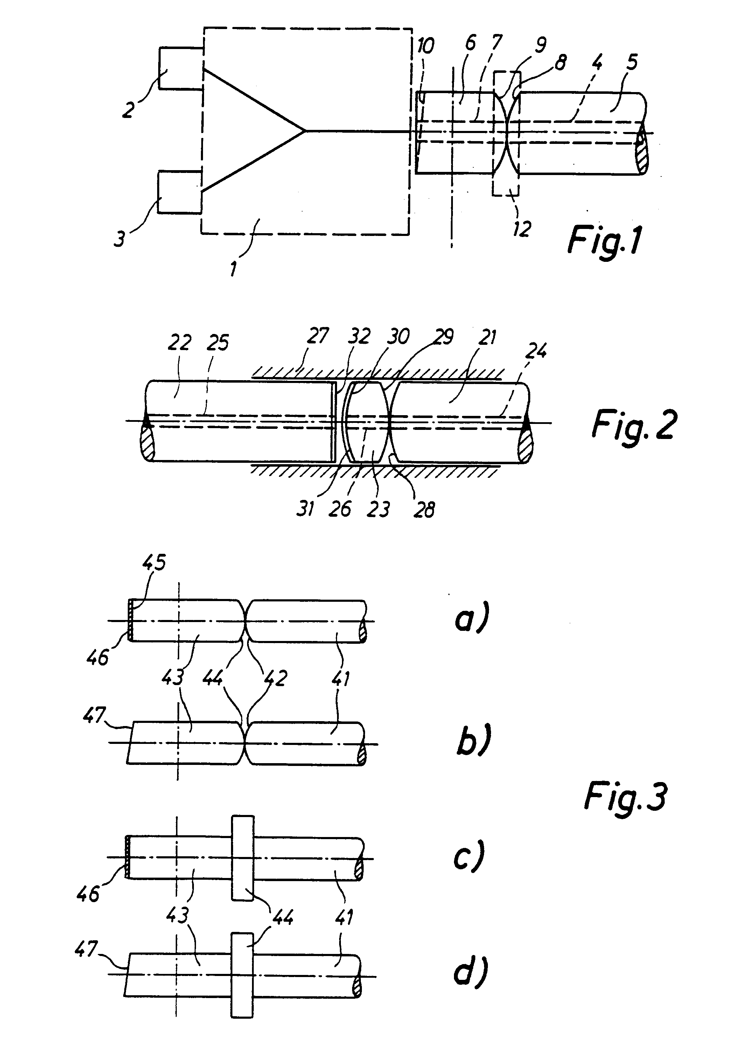

Fig. 1 zeigt eine opto-elektrische Sende- und Empfangsvorrichtung 1 mit einem optischen Sender 2 und einem optischen Empfänger 3. Um hinsichtlich dieser Vorrichtung Wiederholungen zu vermeiden, wird diesbezüglich auf die DE-A-40 41 278 verwiesen.

Zwischen dieser Vorrichtung 1 und einem einen Lichtwellenleiter 4 aufweisenden Steckerstift 5 befindet sich ein Zwischenelement 6, das der Verhinderung von Reflexionen dient. Im Zwischenelement ist ebenfalls eine Lichtwellenleiter-Faser 7 vorgesehen, die vorzugsweise denselben Brechungsindex wie der Lichtwellenleiter 4 des Stekkerstifts 5 bzw. des Lichtwellenleiterkabels aufweist. Die Stirnfläche 8 des Steckerstifts 5 und die dem Steckerstift 4 zugewandte Stirnfläche 9 des Zwischenelements 6 ist jeweils konvex ausgebildet, und diese konvexen Stirnflächen stehen miteinander in direktem physikalischem Kontakt, so daß ein direkter Lichtübergang zwischen der Lichtwellenleiterfaser 4 des Steckerstifts 5 und derjenigen 7 des Zwischenelements 6 ohne Luft/Glas-Übergang vorliegt. An dieser Stelle kann also eine Fresnel-Reflexion nicht auftreten.

Die der Sende- und Empfangsvorrichtung 1 zugewandte Stirnfläche 10 des Zwischenelements 6 kann mit der Kontaktfläche der Sende- und Empfangsvorrichtung 1 ebenfalls in physikalischem Kontakt stehen, aber auch eine reflexionsverhindernde Schicht aufweisen oder, wie dies durch eine gestrichelte schräge Linie angedeutet ist, einen Schrägschliff oder eine Schrägpolitur 11 besitzen. Durch die reflexionsverhindernde Schicht wird eine Fresnel-Reflektion zwischen dem Übergang des Zwischenelements 6 und der Sende- und Empfangsvorrichtung 1 verhindert. Bei Verwendung einer Schräge bzw. eines Schrägschliffes 11 wird zwar die Fresnel-Reflexion auf Grund des Luft/Glas-Übergangs nicht verhindert, die reflektierten Strahlen werden jedoch aus dem eigentlichen Strahlengang geführt, so daß sie das Übersprechverhalten bzw. das Signal/Rausch-Verhältnis der Anordnung nicht nachteilig beeinflussen können.

Zwischen der Stirnfläche 8 des Steckerstifts 5 und derjenigen 9 des Zwischenelements 6 kann statt der Konvexpolitur oder zusätzlich zu dieser ein Brechungsindex-Anpaßelement 12, eine sogenannte Index- oder Matching-Folie, vorgesehen sein, mit der eine Brechungsindex-Anpassung vorgenommen wird.

Fig. 2 zeigt ein Ausführungsbeispiel mit einer Stecker/Stecker-Kopplung, bei der zwischen zwei Steckerstiften oder Ferrulen 21, 22 ein Zwischenelement 23 vorgesehen ist. Durch die Stecker und das Zwischenstück erstrecken sich jeweils Lichtwellenleiterfasern 24, 25 und 26. Die Steckerstifte 21, 22 sowie das Zwischenelement 23 sind in einer Halterung 27 geführt. Die Stirnfläche 28 des Stekkerstifts 21 ist wiederum konvex poliert, ebenso wie die beiden Stirnflächen 29, 30 des Zwischenelements 23. Während zwischen dem Steckerstift 21 und dem Zwischenelement 23 ein Direktkontakt ohne Luft/Glas-Übertritt des Lichts, und damit auch ohne Auftreten einer Fresnel-Reflektion besteht, ist die dem anderen Steckerstift 22 zugewandte Stirnfläche 30 des Zwischenelements 23 mit einer reflexionsverhindernden Schicht 31 versehen, die eine Reflexion ein Glas/Luft-Übergang des Lichtstrahls verhindert. Statt der reflexionsverhindernden Schicht 31 auf der Stirnfläche 30 des Zwischenelements 23 oder zusätzlich zu ihr kann auch auf der Stirnfläche des Steckerstifts 22 eine refexionsverhindernde Schicht 32 vorgesehen sein.

Weitere Möglichkeiten für Ausführungsformen des erfindungsgemäßen optischen Kopplers sind in Fig. 3 schematisch dargestellt.

In Fig. 3 weist der Steckerstift 41 eine konvexe Stirnfläche 42 und das Zwischenelement 43 eine konische, den Steckerstift 41 zugewandte Stirnfläche 44 auf. Zwischen diesen Stirnflächen 42 und 44 besteht ein Direktkontakt, auch als PC-Kontakt bezeichnet. Die dem Steckerstift 41 abgewandte Stirnfläche 45 des Zwischenelements 43 weist eine reflexverhindernde Schicht 46 auf.

Die in Fig. 3b dargestellte Ausführungsform unterschiedet sich von derjenigen der Fig. 3a lediglich dadurch, daß die dem Steckerstift 41 abgewandte Stirnfläche 45 einen Schrägschliff 47 aufweist.

Bei der Ausführungsform gemäß Fig. 3c ist zwischen den einander zugewandten Stirnflächen 42 und 44 des Steckers 41 bzw. des Zwischenstücks 43 eine Brechungsindex-Anpassungsfolie, eine sogenannte Indexfolie 44 vorgesehen, während die dem Steckerstift 41 abgewandte Stirnfläche 45 des Zwischenelements 43 eine reflexionsverhindernde Schicht 46 aufweist.

Die in Fig. 3d dargestellte Ausführungsform unterscheidet sich von derjenigen der Fig. 3c dadurch, daß statt der reflexionsverhindernden Schicht 46 ein Schrägschliff an der dem Stecker 41 abgewandten Stirnfläche vorgesehen ist.

Bei sämtlichen Ausführungsformen der Fig. 3 weisen die Lichtleiterfasern des Steckers und des Zwischenelements vorzugsweise jeweils nahezu denselben Brechungsindex auf.

Die Erfindung wurde zuvor an Hand von Ausführungsbeispielen beschrieben. Dem Fachmann sind jedoch Ausgestaltungen und Abwandlungen möglich, ohne daß dadurch der Erfindungsgedanke verlassen wird. Beispielsweise sind noch weitere mögliche Kombinationen von Ausführungsformen für die Reflexverhinderung möglich, sinnvoll und einfach.

Zusammenfassend sieht die Erfindung folgendes vor:
1. Optischer Koppler für die Verbindung eines Lichtabgebenden Elements mit einem lichtaufnehmenden Element, wobei eine Lichtaustrittsfläche (8, 28, 42 bzw. 9, 29, 44) des lichtabgebenden Elements (5, 21, 41 bzw. 6, 23, 43) in direktem physikalischen Kontakt mit einer Lichteintrittsfläche (9. 29, 44 bzw. 8, 28, 42) des Lichtaufnehmenden Elements (6, 23, 43 bzw. 5, 21 41) steht.
2. Optischer Koppler für eine Verbindung eines Lichtabstrahlenden Elements mit einem lichtaufnehmenden Element, wobei die Lichtaustrittsfläche (8, 28, 42 bzw. 9, 29, 44) und/oder die Lichteintrittsfläche (9, 29, 44 bzw. 8, 28, 42) des lichtabgebenden Elements (5, 21, 41 bzw. 6, 23, 43) bzw. des lichtaufnehmenden Elements (6, 23, 43 bzw. 5, 21, 41) mit einer reflexionsverhindernden Schicht (31, 32, 46) versehen ist.
3. Optischer Koppler für die Verbindung eines Lichtabstrahlenden Elements mit einem lichtaufnehmenden Element, wobei die Lichtaustrittsfläche (8. 28, 42 bzw. 9, 29, 44) und/oder die Lichteintrittsfläche (9. 29. 44) bzw. 8, 28, 42) des lichtabgebenden Elements (5, 21, 41 bzw.6, 23,
43) bzw. des lichtaufnehmenden Elements (6, 23, 43 bzw. 5, 21, 41) eine Schräge (10, 47) zur Lichtausbreitungsrichtung aufweist.
4. Optischer Koppler nach einem der vorhergehenden Punkte, wobei der optische Koppler ein bidirektionaler Koppler ist, und das lichtabgebende Element (5, 21, 41 bzw. 6, 23, 43) gleichzeitig das lichtaufnehmende Element (6, 23, 43 bzw. 5, 21, 41) bzw. das lichtaufnehmende Element (6. 23. 43 bzw. 5, 21, 41) gleichzeitig das lichtabgebende Element (5, 21, 41 bzw. 6, 23, 43) ist.
5. Optischer Koppler nach einem der vorhergehenden Punkte, wobei das lichtabgebende Element (5, 21, 41 bzw. 6, 23, 43) und das lichtaufnehmende Element (6, 23, 43 bzw. 5, 21, 41) im wesentlichen denselben Brechungsindex aufweisen.
6. Optischer Koppler nach einem der vorhergehenden Punkte, wobei die Lichtaustrittsfläche (8, 28, 42 bzw. 9, 29, 44) und/oder die Lichteintrittsfläche (9, 29, 44 bzw. 8, 28, 42) des lichtabgebenden Elements (5, 21, 41 bzw. 6, 23, 43) bzw. des lichtaufnehmenden Elements (6, 23, 43 bzw. 5, 21, 41) poliert ist.
7. Optischer Koppler nach einem der vorhergehenden Punkte, wobei die Lichtaustrittsfläche (8, 28, 42 bzw. 9 29, 44) und/oder die Lichteintrittsfläche (9, 29, 44 bzw. 8, 28, 42) des lichtabgebenden Elements (5, 21, 41 bzw. 6, 23, 43) bzw. des lichtaufnehmenden Elements (6, 23, 43 bzw. 5. 21. 41) angeritzt und gebrochen ist.
8. Optischer Koppler nach einem der vorhergehenden Punkte, wobei wenigstens eine Lichtaustrittsfläche (8, 28, 42 bzw. 9, 29, 44) und/oder eine Lichteintrittsfläche (9, 29, 44 bzw. 8, 28, 42) des lichtabgebenden Elements (5. 21. 41 bzw.
6. 23. 43) bzw. des lichtaufnehmenden Elements (6, 23, 43 bzw. 5, 21, 41 konvex ist.
9. Optischer Koppler nach einem der vorhergehenden Punkte, wobei zwischen der Lichtaustrittsfläche (8, 28, 42 bzw. 9, 29, 44) und der Lichteintrittsfläche (9, 29, 44 bzw. 8, 28, 42) des lichtabgebenden Elements (5, 21, 41 bzw. 6, 23, 43) bzw. des lichtaufnehmenden Elements (6,
23, 43 bzw. 5, 21, 41) ein Brechungsindex-Anpaßelement (12, 44) vorgesehen ist.
10. Optischer Koppler nach 9, wobei das Brechungsindex-Anpassungselement (12, 44) eine Index-Folie ist.
11. Optischer Koppler nach einem der vorhergehenden Punkte, wobei das lichtabgebende Element (5, 21, 41 bzw. 6, 23, 43) und oder das lichtaufnehmende Elemente (6, 23, 43 bzw. 5, 21, 41) ein Lichtwellenleiter-Steckerstift (5, 21, 22,41) ist.
12. Optischer Koppler nach einem der vorhergehenden Punkte, wobei das lichtabgebende Element (5, 21, 41 bzw. 6, 23, 43) und oder das lichtaufnehmende Element (6, 23, 43 bzw. 5, 21, 41) ein optisch-abbildendes System ist.
13. Optischer Koppler nach 12, wobei das optisch ab-bildende System eine Gradientenindexlinse, eine Kugellinse, eine Fresnellinse und/oder einer Kombination dieser Linsen ist.
14. Optischer Koppler nach einem der vorhergehenden Punkte, wobei zwischen dem lichtabgebenden Element (1, 21, 41 bzw. 5, 22) und dem lichtaufnehmenden Element (5, 22 bzw. 1, 21,
41) ein Zwischenelement (6, 23, 43) vorgesehen ist.
15. Optischer Koppler nach 14, wobei das Zwischenelement (6, 23, 43) ein reflexverhinderndes Element ist.
16. Optischer Koppler nach 14 oder 15, wobei das Zwischenelement (6, 23, 43) ein Lichtwellenleiter-Stück (7, 26) aufweist.
17. Optischer Koppler nach 14 bis 16, wobei das Zwischenelement (6, 23, 43) austauschbar ist.
18. Optischer Koppler nach 14 bis 17, wobei das Zwischenelement (6, 23, 43) aus einem plastisch verformbaren Material besteht.
19. Optischer Koppler nach 18, wobei das plastisch verformbare Material Silicon ist.
20. Optischer Koppler nach 14 bis 19, wobei das Zwischenelement (6, 23, 43) aus einem Lichtwellenleiter-Steckerstift hergestellt ist.
21. Optischer Koppler nach 14 bis 20, wobei mehrere Zwischenelemente (6, 23, 43) aus einem Steckerstift gewonnen werden.
22. Optischer Koppler nach 14 bis 21, wobei das Zwischenelement (6, 23, 43) aus Keramik besteht.
23. Optischer Koppler nach 14 bis 22, wobei der Stecker (5, 21, 22, 41) und/oder das Zwischenelement (6, 23, 43) verdrehgesichert ist.
24. Optischer Koppler nach einem der vorhergehenden Punkte, wobei der optische Koppler ein Stecker/Stecker-, Stecker/Sender- und/oder ein Stecker/Empfänger-Koppler ist.

## Patentansprüche

1. Optischer Koppler für die Verbindung eines lichtabgebenden Elements mit einem lichtaufnehmenden Element, dadurch gekennzeichnet , daß eine Lichtaustrittsfläche (8, 28, 42 bzw. 9, 29, 44) des lichtabgebenden Elements (5, 21, 41 bzw. 6, 23, 43) in direktem physikalischen Kontakt mit einer Lichteintrittsfläche (9. 29, 44 bzw. 8, 28, 42) des lichtaufnehmenden Elements (6, 23, 43 bzw. 5, 21 41) steht.

2. Optischer Koppler für eine Verbindung eines Lichtabstrahlenden Elements mit einem lichtaufnehmenden Element, dadurch gekennzeichnet, daß die Lichtaustrittsfläche (8, 28, 42 bzw. 9, 29, 44) und/oder die Lichteintrittsfläche (9, 29, 44 bzw. 8, 28, 42) des lichtabgebenden Elements (5, 21, 41 bzw. 6, 23, 43) bzw. des lichtaufnehmenden Elements (6, 23, 43 bzw. 5, 21, 41) mit einer reflexionsverhindernden Schicht (31, 32, 46) versehen ist.

3. Optischer Koppler für die Verbindung eines Lichtabstrahlenden Elements mit einem lichtaufnehmenden Element, dadurch gekennzeichnet, daß die Lichtaustrittsfläche (8. 28, 42 bzw. 9, 29, 44) und/oder die Lichteintrittsfläche (9. 29. 44) bzw. 8, 28, 42) des lichtabgebenden Elements (5, 21, 41 bzw.6, 23, 43) bzw. des lichtaufnehmenden Elements (6, 23, 43 bzw. 5, 21, 41) eine Schräge (10, 47) zur Lichtausbreitungsrichtung aufweist.

4. Optischer Koppler nach einem der vorhergehenden Ansprüche, dadurch gekennzeichnet, daß der optische Koppler ein bidirektionaler Koppler ist, und das lichtabgebende Element (5, 21, 41 bzw. 6, 23, 43) gleichzeitig das lichtaufnehmende Element (6, 23, 43 bzw. 5, 21, 41) bzw. das lichtaufnehmende Element (6. 23. 43 bzw. 5, 21, 41) gleichzeitig das lichtabgebende Element (5, 21, 41 bzw. 6, 23, 43) ist.

5. Optischer Koppler nach einem der vorhergehenden Ansprüche, dadurch gekennzeichnet, daß das lichtabgebende Element (5, 21, 41 bzw. 6, 23, 43) und das lichtaufnehmende Element (6, 23, 43 bzw. 5, 21, 41) im wesentlichen denselben Brechungsindex aufweisen.

6. Optischer Koppler nach einem der vorhergehenden Ansprüche, dadurch gekennzeichnet, daß die Lichtaustrittsfläche (8, 28, 42 bzw. 9, 29, 44) und/oder die Lichteintrittsfläche (9, 29, 44 bzw. 8, 28, 42) des lichtabgebenden Elements (5, 21, 41 bzw. 6, 23, 43) bzw. des lichtaufnehmenden Elements (6, 23, 43 bzw. 5, 21, 41) poliert ist.

7. Optischer Koppler nach einem der vorhergehenden Ansprüche, dadurch gekennzeichnet, daß die Lichtaustrittsfläche (8, 28, 42 bzw. 9 29, 44) und/oder die Lichteintrittsfläche (9, 29, 44 bzw. 8, 28, 42) des lichtabgebenden Elements (5, 21, 41 bzw. 6, 23, 43) bzw. des lichtaufnehmenden Elements (6, 23, 43 bzw. 5. 21. 41) angeritzt und gebrochen ist.

8. Optischer Koppler nach einem der vorhergehenden Ansprüche, dadurch gekennzeichnet, daß wenigstens eine Lichtaustrittsfläche (8, 28, 42 bzw. 9, 29, 44) und/oder eine Lichteintrittsfläche (9, 29, 44 bzw. 8, 28, 42) des lichtabgebenden Elements (5. 21. 41 bzw. 6. 23. 43) bzw. des lichtaufnehmenden Elements (6, 23, 43 bzw. 5, 21, 41 konvex ist.

9. Optischer Koppler nach einem der vorhergehenden Ansprüche, dadurch gekennzeichnet, daß zwischen der Lichtaustrittsfläche (8, 28, 42 bzw. 9, 29, 44) und der Lichteintrittsfläche (9, 29, 44 bzw. 8, 28, 42) des lichtabgebenden Elements (5, 21, 41 bzw. 6, 23, 43) bzw. des lichtaufnehmenden Elements (6, 23, 43 bzw. 5, 21, 41) ein Brechungsindex-Anpaßelement (12, 44) vorgesehen ist.

10. Optischer Koppler nach Anspruch 9, dadurch gekennzeichnet, daß das Brechungsindex-Anpassungselement (12, 44) eine Index-Folie ist.
